# EUROPEAN PATENT SPECIFICATION

(11) **EP 3 205 945 B1**
(45) Date of publication and mention of the grant of the patent: **31.03.2021**
(21) Application number: 17155540.2
(22) Date of filing: 10.02.2017
(51) Int. Cl.: F24D 3/14, E04B 5/48, E04C 2/52

(54) **PREFABRICATED FLOOR PART, SYSTEM, FLOOR AND METHOD FOR FLOOR HEATING AND/OR COOLING, AND MACHINE FOR PRODUCING THE FLOOR PART**
VORGEFERTIGTES BAUTEIL FÜR EINEN FUSSBODEN, SYSTEM, FUSSBODEN UND VERFAHREN ZUR FUSSBODENHEIZUNG UND/ODER -KÜHLUNG, UND MASCHINE ZUR HERSTELLUNG DES BAUTEILS
PARTIE DE PLANCHER PRÉFABRIQUÉ, SYSTÈME, PLANCHER ET PROCÉDÉ DE CHAUFFAGE ET / OU DE REFROIDISSEMENT DE PLANCHER, ET MACHINE POUR LA PRODUCTION DE LA PARTIE DE PLANCHER

(30) Priority: 10.02.2016 NL 2016247; 11.04.2016 NL 2016581; 16.06.2016 NL 2016979
(43) Date of publication of application: 16.08.2017
(73) Proprietor: Van Losser Investments B.V., 7461 AD Rijssen (NL)
(72) Inventor: Last, Vidar Johan, 8266 JE Kampen (NL); Roozendaal, Wichert, 8266 JM Kampen (NL)
(74) Representative: Verdijck, Gerardus

(56) References cited:
- EP-A1- 1 457 742
- EP-A2- 1 219 905
- EP-A2- 2 256 419
- CN-U- 203 052 880
- DE-A1- 2 018 982
- DE-A1- 10 020 843
- DE-C1- 3 509 264

## Description

The invention relates to a prefabricated floor part for floor heating and/or cooling. The invention relates particularly to a floor part comprising a tube for passage of a heat transport medium such as water and/or glycol.

Floor heating and/or cooling can be realized by pumping a hot or cold medium through a tube system in a floor of a building, whereby the building is subsequently heated or cooled. This tube system must be laid in the said building. The tube system is for instance cast into the floor. The tubes of the floor heating are connected to a manifold of the floor heating and/or cooling system.

EP 1 457 742 A1 discloses a cooling system comprising a prefabricated floor part comprising the features of the preamble of claim 1.

EP 1 219 905 A2, EP 2 256 419 A2 and DE 100 20 843 A1 disclose heating systems.

Laying the tubes for the floor heating is labour-intensive. Even experienced professionals take some time to lay the tubes.

An object of the invention is to make it possible to lay the tubes for floor heating and/or cooling in a shorter period of time.

This object is achieved with the prefabricated floor part according claim 1.

The prefabricated floor part can be rolled out onto the floor of a building so as to thus form a tube system for floor heating and/or cooling. The tube can particularly be manufactured from cross-linked polyethylene or PE-RT so that it can be coupled to other tubes or a manifold of the associated floor heating or cooling without the tube being heated or adhered. Use is for instance made for coupling of the tube of a sleeve fitting, for instance a compression sleeve fitting, or a crimp ring fitting.

A prefabricated tube can in this way be rolled out on site. The tube is then already provided in a desired form, i.e. a meander or spiral form. This saves time during installation.

Because the carrier mat can be cut with a hand tool, the carrier mat can be shortened to the desired size. It is moreover possible to cut partially into the carrier mat so that the carrier mat can be bent. The carrier mat and the tube attached thereto can hereby be laid for instance in a corner or installed around a pillar of the building. Because the carrier mat can be cut by hand, the floor part can be easily adapted during the installation work.

whole to a customer or end user.

A carrier mat is preferably provided with a plurality of floor parts arranged successively on the carrier mat, wherein each floor part is separated from a subsequent floor part by a small intermediate space in which the tube or tubes are straight running and do not have a meander or spiral form arrangement. It hereby becomes possible to transport a plurality of prefabricated floor parts on a single roll to a customer or end user.

A further advantage of the prefabricated floor part according to the invention, as well as the embodiment in which a plurality of floor parts are arranged on a carrier mat, is that the manufacture of the floor part can take place under controlled conditions. Fouling can hereby be prevented and it is possible to ensure a constant positioning of the tube or tubes on the carrier mat so that so-called blind spots, where no tube is arranged, do not occur. This results in a floor part with high-quality heating and/or cooling. The floor part can in principle be produced to a standard size, although the prefabrication of a floor part can also be adapted to the specifications of a customer or end user, wherein the customer receives only floor parts made to size and during installation at the end use location the quantity of waste is reduced.

The carrier mat is preferably preprocessed for the purpose of cutting thereof, for instance in that the carrier mat is perforated at one or more locations along the whole width direction, and it is easily possible to cut into or cut off the carrier mat along the perforation line or to tear into or tear off the carrier mat by hand. A plastic carrier mat, such as a carrier mat of PE or PP, is for instance provided with such a perforation.

The tube of cross-linked polyethylene or PE-RT can likewise be shortened, for instance using known tube cutters or tube shears. The whole prefabricated carrier mat can thus be shortened on site using hand tools in order to have the floor part fit onto the respective floor.

The carrier mat is preferably provided with a flexible material such that the carrier mat is bendable in both its longitudinal direction and its width direction.

The tube is preferably provided in meander form on the carrier mat. The meander form has the advantage that it is possible to cut further into the carrier mat without cutting through the tube, so that the floor part can even be laid in a bend of up to 180 degrees. The tube is preferably provided in meander form on the carrier mat. It is however alternatively possible to provide the tube in spiral form on the carrier mat.

The centre-to-centre distance of the parallel tube parts of the meander-shaped or spiral-shaped pattern can also be selected subject to the desired heat emission. This distance is for instance 10-20 cm.

There are different variants of cross-linked polyethylene (PEX, or also XLPE). Peroxide cross-linked polyethylene (PEX-A) is preferably applied. PEX-B or PEX-C can however alternatively be applied.

The diameter of the tube is preferably 10-32 mm, for instance 10, 14, 16, 17, 20, 25 or 32 mm. The wall thickness of the tube is preferably 1-3 mm, for instance about 2 mm.

The carrier mat can preferably be cut with a hand tool. The material of the carrier mat is preferably selected and the carrier mat has a thickness such that the force which has to be exerted on the carrier mat in order to cut it is less than 500 N, preferably less than 300 N and more preferably less than 100 N. Use is for instance made for cutting purposes of side cutting pliers or centre cutting pliers. The carrier mat can preferably be cut using a non-electrical hand tool.

In a preferred embodiment the carrier mat is embodied as a metal mesh with a wire thickness of 1-3 mm.

Because of the small wire thickness of 1-3 mm the carrier mat can be cut with a hand tool. At such a small wire thickness the weight of the carrier mat moreover remains limited. A relatively large floor part can hereby be manufactured and rolled up without the tube being damaged by the weight of the rolled-up package.

The mesh width of the carrier mat is for instance 5-20 cm, preferably 15 cm.

With such a mesh width the weight of the carrier mat is further limited so that the tube is not damaged by the weight of the rolled-up package.

The metal is for instance a zinc-plated metal, such as zinc-plated steel or zinc-plated iron, or a galvanized metal such as galvanized steel or galvanized iron.

In another embodiment the carrier mat is embodied as a plastic carrier mat.

The carrier mat comprises for instance polyethylene (PE), polypropylene (PP), polyvinyl chloride (PVC) or chlorinated polyvinyl chloride (CPVC) and/or a plastic film, such as a PE film. The carrier mat can be embodied as an uninterrupted plastic carrier or as a mesh-like carrier of plastic.

In yet another embodiment the carrier mat is of rubber, textile, bamboo and/or reed.

The carrier mat is for instance embodied as a mesh-like carrier of rubber, textile, bamboo or reed.

In a preferred embodiment the prefabricated floor part comprises:
- a carrier mat; and
- a first tube and a second tube which each comprise a first and second outer end for connection to a manifold or other tubes of the floor heating and/or cooling,
wherein the first tube and second tube are attached meandering together to the carrier mat.

The two tubes are provided on the carrier mat in a pattern meandering together. That is, the two tubes follow substantially the same winding pattern. The two tubes remain some distance from each other; the tubes do not overlap.

The meandering pattern of each tube comprises a number of parts which extend transversely of the longitudinal direction of the carrier mat. These tube parts extending in transverse direction are connected to each other via bends in the respective tube, wherein a bend to the right and a bend to the left are provided in alternating manner. The transversely extending parts of the two tubes are in each case substantially the same distance from each other. That is, the transversely extending tube parts of the first tube are in each case substantially the same distance from the closest transversely extending tube part of the second tube. The centre-to-centre distance between the transversely extending tube parts of the two tubes is hereby substantially constant.

The centre-to-centre distance between adjacent transversely running tube parts of the two tubes is for instance 10-20 cm. This centre-to-centre distance can be selected subject to the desired heat emission.

It is noted that the mutual distance between the tubes in the bends of the meandering pattern can vary to some extent from the constant centre-to-centre distance, although this is not essential.

Three or more tubes can if desired be provided in a pattern where they meander together.

Because the floor part is provided as a prefabricated element, the tubes can be installed in the meandering pattern in a single operation. This saves time during installation.

During use the two outer ends of each tube are connected to a manifold of the floor heating or cooling. The two outer ends of the first tube are connected as a first group of the manifold and the two outer ends of the second tube are connected as a second group of the manifold. The tubes are connected here such that the flows of the heat transport medium through the tubes are in opposite direction during use. The tube parts of the first tube which supply hot transport medium hereby lie adjacently of the tube parts of the second tube which feed back cooled transport medium. The floor temperature is hereby substantially the same everywhere. This in contrast to conventional systems with a single meandering tube in which the floor temperature varies over the floor surface.

The efficiency of the floor heating/cooling is moreover hereby increased. Because the floor heating/cooling is more efficient, it moreover becomes possible to lay more metres of tubing system than in conventional systems. In conventional systems in which a single meandering tube is provided, the maximum tube length is about 100 metres. With the invention however the tube length of each tube can be about 140 metres. Since two tubes are applied on the carrier mat, an overall gain of 80 metres can be realized per floor part. A large number of square metres of floor heating/cooling can therefore be laid in a short period of time with the floor part according to the invention.

In a preferred embodiment each of the first tube and the second tube comprises a meandering pattern of alternately a left-hand loop and a right-hand loop, wherein the left-hand loop of the one tube is arranged in the left-hand loop of the other tube, while the right-hand loop of the other tube is arranged in the right-hand loop of the one tube.

A left-hand loop is understood to mean a first tube part which extends in transverse direction and which is connected via a bend to a second tube part extending in transverse direction, wherein the bend is located on the left-hand side. It is noted that the bend in the left-hand loop is a bend to the right. In similar manner a right-hand loop is understood to mean a first tube part which extends in transverse direction and which is connected via a bend to a second tube part extending in transverse direction, wherein the bend is located on the right-hand side.

The left-hand loop of the one tube is arranged in each case in the right-hand loop of the other tube so that the pattern is formed where they meander together .

In a further preferred embodiment one of the left-hand loop and right-hand loop is in each case wider than the other loop, wherein the narrower loops of the first tube are arranged in each case in the wider loops of the second tube and the narrower loops of the second tube are arranged in each case in the wider loops of the first tube.

In this embodiment a wide left-hand and right-hand loop are respectively alternated in each tube with a narrow right-hand and left-hand loop. In the case of the wider loops the distance between the transversely extending tube parts of the respective tube is greater than the distance between the transversely extending tube parts of the narrower loops of the same tube.

The distance between the transversely extending tube parts of the wide loops of the first tube is preferably substantially equal to the distance between the transversely extending tube parts of the wide loops of the second tube. Similarly, the distance between the transversely extending tube parts of the narrow loops of the first tube is preferably substantially equal to the distance between the transversely extending tube parts of the narrow loops of the second tube. Furthermore, the distance between the transversely extending tube parts of each wider loop is preferably substantially three times the distance between the transversely extending tube parts of each narrower loop. The narrower loops can in that case be arranged in the wider loops such that the distance between a transversely extending tube part of the first tube and an adjacent transversely extending tube part of the second tube is in each case substantially equal. This distance substantially corresponds in that case to the distance between the transversely extending tube parts of a narrower loop.

In a preferred embodiment of the prefabricated floor part the first tube for heat transport medium is attached to the upper surface of the carrier mat and the second tube for heat transport medium is attached to the lower surface of the carrier mat.

That is, a tube is provided on both sides of the carrier mat for transport of a heat transport medium such as water and/or glycol.

Because the floor part is provided as a prefabricated element, the two tubes can be installed in the desired pattern in a single operation. This saves time during installation.

During use the outer ends of each tube are connected to a manifold of the floor heating or cooling. The outer ends of the first tube are for instance connected as a first group of the manifold and the outer ends of the second tube are connected as a second group of the manifold.

The heat transport medium flowing through the tubes during use will cool - in the case of heating - or heat up - in the case of floor cooling - during transport through the first and second tubes. This results in a temperature gradient along the length of the tube. The tubes are however preferably connected to the manifold such that in use the heat transport medium in the first tube flows from a first side of the carrier mat to a second side of the carrier mat, while the heat transport medium in the second tube flows from the second side to the first side of the carrier mat. The cooling or heating of the liquid in the first tube will hereby be in any case partially compensated by the second tube which substantially brings about an opposed temperature gradient. A uniform floor heating/cooling is therefore hereby obtained. By applying two tubes on either side of the carrier mat the heat emission/the capacity is moreover increased, preferably even doubled, compared to a conventional system with a single tube. The tubes are generally not provided in a straight line on the carrier mat but have for instance a meandering or spiral-shaped pattern.

In an embodiment the first tube and the second tube follow a different pattern on the carrier mat for heating or cooling different areas of the floor. These different areas can also be partially overlapping. In other words, the first tube and the second tube are not aligned, although they can partially overlap or cross.

In a first embodiment the tubes are each attached in a meander-shaped pattern to the carrier mat, wherein the meander-shaped pattern of the first tube is out of phase relative to the meander pattern of the second tube.

Realized in this manner is that the tubes cover a greater part of the surface area of the floor for heating/cooling than if the tubes were to be substantially aligned. A more uniform and more effective heating/cooling is hereby achieved.

In the case of a meandering pattern the respective tube comprises a number of tube parts which extend substantially transversely of the longitudinal direction of the carrier mat. These tube parts extending in transverse direction are connected to each other via bends in the respective tube, wherein alternately a bend to the right and a bend to the left are provided. The distance between the transversely extending parts of a tube is designated the centre-to-centre distance. The centre-to-centre distance of a meandering tube is preferably substantially constant.

The centre-to-centre distance can be selected subject to the desired heat emission and/or the desired capacity. A centre-to-centre distance of 10-20 cm is usually opted for in conventional systems. By working with two tubes, each provided on a different side of the carrier mat, the capacity and/or heat emission is however doubled. Using for instance two tubes, each with a centre-to-centre distance of 10 cm, the capacity and/or the heat emission is comparable to that of a conventional system with a centre-to-centre distance of 5 cm.

The tubes have for instance a meander-shaped pattern with substantially the same period, but the tubes are attached out of phase to the carrier mat.

The tubes are preferably 180 degrees out of phase.

In a second embodiment the tubes are each attached in a spiral-shaped pattern to the carrier mat, wherein the patterns of the tubes do not overlap each other.

In another embodiment the tubes are each attached in a spiral-shaped pattern to the carrier mat, wherein the tubes are aligned on either side of the carrier mat, i.e. the tubes are situated substantially directly above each other and thus follow the same pattern.

It is noted that the tubes according to diverse embodiments can partially overlap each other or even be wholly aligned. This is particularly advantageous in combination with a mesh-like carrier, such as a metal mesh or a plastic mesh, since the tubes can together then be easily attached to the carrier mat by together attaching the tubes to the mat at positions where they cross/overlap each other, for instance by means of a braiding machine, a tacker device or a cable tie gun.

According to the invention a first tube is pressurized and further tubes can be pressurized, as well. Each outer end of the first tube is provided with a shut-off valve, so that the pressurizing air is held in the tube. Each of the other tubes can be pressurized by providing the outer ends thereof with a suitable shut-off valve, so that the pressurizing air is held in the tube. According to the invention the tube is pressurized with compressed air. Pressurizing the tube with air does not increase the weight of the tube because of the pressurization. Because the tube is filled with air and sealed, the tube is less likely to be dented in the rolled-up state of the floor part. A relatively long floor part can hereby be rolled up without the tube being damaged in the rolled-up state by the weight of the rolled-up package. The pressurizing medium is sealed which can be done in diverse ways, such as with pressurizing caps or sealing caps.

In a preferred embodiment each of the tubes is attached in a path in the longitudinal direction of the carrier mat, wherein the width of the mat is greater than the path covered by the tubes so that an uncovered strip is formed adjacently of the path covered by the tubes.

In other words, the meander-shaped or spiral-shaped pattern of the tubes covers only a part of the carrier mat, while at least one uncovered part of the carrier mat is provided adjacently of the path covered by the tubes. This uncovered part provides space for passage of tube parts, for instance of other floor parts. The tube parts carried over the uncovered part of the carrier mat during installation of the prefabricated floor part can if desired be attached thereto during the installation.

A first floor part has for instance a meander-shaped tube, wherein one outer end of the tube is located at a first outer end of the floor part and the other outer end of the tube is located at an opposite outer end of the floor part. This latter outer end of the tube is not attached fixedly to the carrier mat is and can be guided via the uncovered part of the carrier mat to the first outer end of the floor part and, if desired, be attached to this uncovered part during installation. Both outer ends of the tube are thus situated close to each other, which is convenient for instance for the connection to a manifold. In another example one or more tubes of other floor parts are guided to the manifold via the uncovered part of the first carrier mat.

About 10-20 cm of the carrier mat of the prefabricated floor part is for instance left uncovered. In the case where two tubes are arranged on either side of the mat an uncovered strip can be provided on both the upper side and the underside. A strip is however preferably left uncovered only on the upper side of the carrier mat.

In a preferred embodiment at least one outer end of each tube extends from the carrier mat.

Each tube is attached at multiple points to the carrier mat so that the tube follows a meander-shaped or spiral-shaped pattern on the carrier mat. It is however possible that an outer end of the tube, i.e. an end part of the tube, is not attached to the carrier mat so that this part can be positioned freely relative to the carrier mat. This provides the flexibility required during installation. The free outer end can be used to couple tubes of adjacent floor parts or to couple the tubes to a manifold.

In a preferred embodiment the tube has a length of 100-120 metres.

The invention further relates to a system for laying floor heating or cooling, comprising the prefabricated floor part as described above and mechanical tube couplings for coupling the tube or tubes to a manifold and/or to another tube of the floor heating or cooling.

Using the mechanical tube couplings the tube of the floor part can be connected to a manifold or to other tubes without the tube needing to be heated and without adhesive needing to be used. For coupling of the tube use is for instance made of a sleeve fitting, for instance a compression sleeve fitting, or a crimp ring fitting.

In an alternative embodiment in which the system comprises two tubes the tubes of the floor part are each attached in a meander-shaped pattern to the carrier mat, wherein the outer ends of the tubes are coupled to the manifold of the floor heating or cooling such that in use the heat transport medium in the first tube flows from a first side of the carrier mat to a second side of the carrier mat, while the heat transport medium in the second tube flows from a second side of the carrier mat to the first side of the carrier mat.

In a further embodiment the system comprises a manifold connected to the first tube and the second tube, wherein the manifold is switchable between a first mode, in which the manifold allows heat transport medium to flow through both tubes, and a second mode in which the manifold allows heat transport medium to flow through only one of the tubes.

Season-dependent heating in this way becomes possible. This means that the capacity of the floor heating/cooling can be modified on the basis of the outdoor temperature. One of the tubes or both the tubes are for instance applied depending on the season. It is thus possible in the winter to opt to use both tubes for heating, and both tubes can be used in the summer for cooling. In spring and autumn one of the two tubes can be used for heating or cooling as necessary on the basis of the weather and/or the outdoor temperature.

It is preferably also possible to switch to a third mode in which the system is switched off so that the heat transport medium does not flow in either of the two tubes. In the case of a floor heating this may for instance be desirable in the summer.

The above stated system with season-dependent heating can alternatively also be realized with a system provided with two tubes which is laid wholly or partially at the location of end use, so wherein partial or no use is made of prefabricated floor parts. The different options as described in the claims and description can be applied in such an embodiment, with the proviso that these are realized on site and not in the factory.

The system is preferably manufactured from prefabricated floor parts wherein the carrier mat can be rolled up together with the tubes. Manufacture of the floor parts as well as rolling up thereof takes place in the factory under controlled conditions. This has the advantage that fouling of the tubes can be prevented. It is also possible to guarantee that a constant distribution of the tubes is realized over the carrier mat, so that blind spots where no heating/cooling takes place are avoided. The floor parts of the system can be transported in rolled-up state to the location of use. It is possible to opt to pressurize the tubes and provide them with a seal prior to transport. The system can be a standard embodiment of the system, wherein the carrier mat from which the floor parts are manufactured is supplied as a large roll, wherein a plurality of floor parts can be manufactured from each roll of carrier mat. A plurality of standard floor parts are arranged on each roll, preferably with a small intermediate space between the floor parts so that they can be later separated. The system can however be manufactured to specification by modifying the software for manufacture of the system. In such an embodiment the system can comprise larger and/or smaller floor parts which together form a system for a specific building. Use is preferably made of a system with two tubes, wherein the tubes are arranged on either side of the mat. Different flows can hereby be separated and separately adjusted and/or used. Systems with a single tube or two tubes on the same side of the carrier mat are however also possible. The above described aspects of the system can also be applied individually, just as the system itself can be applied in different variants.

The invention further relates to a floor provided with a prefabricated floor part as described above.

In an embodiment the floor is further provided with a first tube and a second tube which are provided meandering together on the floor, wherein each tube comprises a first and second outer end which are connected to a manifold of the floor heating and/or cooling such that during use the flow through the first tube is in opposite direction to the flow through the second tube meandering together therewith.

It is possible to lay the first and second tube in the pattern meandering together on the floor during the installation operations. The floor is however preferably formed by making use of one or more of the above described prefabricated floor parts, whereby the tubes are already provided in the pattern meandering together, and the tube system for the floor heating/cooling can hereby be laid more quickly.

The invention further relates to a machine for producing the prefabricated floor part as specified above, comprising:
- a supply line for supplying the roll-up carrier mat, wherein the supply line is configured to transport the carrier mat in its longitudinal direction;
- a first supply line for supplying a tube;
- a first guide for positioning the first tube in meandering or spiral form relative to the carrier mat; and
- a binding apparatus for mechanically binding the first tube to the carrier mat in a meander-shaped or spiral-shaped pattern with binding means.

Because use is made of mechanical attachment instead of attachment by means of adhesive or heating, the liquid-tightness of the PEX tube is not adversely affected. The binding apparatus for mechanically attaching the tube comprises for instance a braiding machine or a tacker device.

The roll-up carrier mat is for instance transported through the machine in the direction of the braiding machine or the tacker device. The machine likewise supplies a tube which is laid in the desired pattern on the rolled-out carrier mat and attached by the braiding machine or the tacker device.

The binding means for mechanical attachment of the tube comprise for instance staples (for instance tacker staples) or nails (for instance tacker nails). The staples or nails are for instance of metal, though preferably of plastic. The staples or nails clamp the tube to the carrier mat without piercing the tube wall. The staples or nails are for instance U-shaped.

For the meandering attachment of the tube to the carrier mat the tube is positioned by a first guide. It is possible here to envisage for instance the feed to a carriage which can move reciprocally in the width direction of the carrier mat while the carrier mat can move in longitudinal direction along the carriage. The tube is laid in each case in the width direction by the carriage and attached by the braiding machine or the tacker device, after which the carrier mat is displaced through the desired centre-to-centre distance in the longitudinal direction. The carriage then moves in the opposite direction in order to thus lay the following parallel part of the meander-shaped pattern. The braiding machine or the tacker device once again provides for attachment. This process is repeated so that the meander-shaped pattern is formed.

The machine according to the invention can be configured such that each roll of carrier material from which the carrier mat is formed is provided with a predetermined number of floor parts. The floor parts are separated from each other here by an intermediate strip where the tubes do not meander but run straight. The carrier mat with the plurality of floor parts arranged thereon can be transported as one whole to the end user and there cut to size. When a smaller number of floor parts are required, the required number of floor parts can be cut to size in the factory before being transported to the end user. The machine can also be modified to manufacture floor parts on the basis of preprogrammed specifications. A flexible manufacturing method is hereby realized. The machine according to the invention can hereby be used for standard production as well as production according to specification.

In an alternative embodiment in which the floor part comprises two tubes the machine according to the invention comprises a second tube feed for supplying the second tube, a second guide for meandering positioning of the second tube relative to the carrier mat and a second binding apparatus for mechanically attaching the second tube to the carrier mat with binding means, wherein each of the first tube feed and the second tube feed are arranged transversely of the transport direction of the carrier mat, and wherein the machine is provided with a guide mechanism movable along the guides for guiding the first or second tube or both the first tube and the second tube.

Because use is made of mechanical attachment instead of attachment by means of adhesive or heating, the liquid-tightness of the tubes is not adversely affected. The second binding apparatus for mechanically attaching the tube comprises for instance a braiding machine, a tacker device or a cable tie gun.

The carrier mat is for instance transported in rolled-out state with the feed line in the direction of the braiding machine, the tacker device or the cable tie gun. The tubes are supplied using the first and second tube feeds and laid in the pattern meandering together on the rolled-out carrier mat by the respective first and second guide and subsequently attached by the braiding machine, the tacker device or the cable tie gun.

The binding means for mechanically attaching the second tube comprise for instance staples (for instance tacker staples) or nails (for instance tacker nails). The staples or nails are for instance of metal, though preferably of plastic. The staples or nails clamp the tube to the carrier mat without piercing the tube wall. The staples or nails are for instance U-shaped. A tacker device is preferably applied in combination with a continuous carrier mat.

In a currently preferred embodiment the first and second binding apparatuses for mechanically attaching the tubes comprise a braiding machine or cable tie gun. A braiding machine or cable tie gun is preferably applied in combination with a mesh-like carrier mat. The braiding machine or cable tie gun attaches the respective tube to the carrier mat by arranging a braiding wire or cable tie as attaching means round the tube and the lattice of the carrier mat.

The tubes are each supplied to the guide mechanism which can move reciprocally along one or both guides in the width direction of the carrier mat, while the carrier mat can move in longitudinal direction along the guide mechanism. It is also possible to opt for two guide mechanisms, wherein each of the guide mechanisms is coupled to a guide and wherein the guide mechanisms are adapted for co-action. The first and second guide are for instance embodied as a rail. One tube at a time is placed in the width direction on the carrier mat by the corresponding guide mechanism and attached by the attaching means so that a tube part extending in transverse direction is attached to the carrier mat. The carrier mat is then displaced through the desired distance in the longitudinal direction in order to form a loop of the meandering pattern. The guide mechanism subsequently moves in opposite direction along the guide in order to form the following transversely extending part of the meander-shaped pattern of the respective tube. This tube part is likewise attached to the mat by means of the attaching means, such as a tacker device, braiding machine or cable tie gun. This process is repeated so that the respective tube is attached in the desired meander-shaped pattern to the carrier mat.

It is noted that the carrier mat can be supplied horizontally as well as vertically in the machine. It is further noted that in this embodiment the machine can also be modified as described above to manufacture standard floor parts as well as floor parts to specification. The above described features are seen as also being included in this embodiment by way of reference thereto.

The machine comprises for instance a cutting tool for cutting the carrier mat and/or the tube to the desired length.

The machine for producing a prefabricated floor part according to the invention is preferably used to arrange tubes for floor heating and/or cooling. The machine according to the invention can however also be applied extremely well to arrange other flexible tubes in a prefabricated floor part. It is possible here to envisage tubes for water supply, flexible tubes for sewerage and/or water drainage, supply conduits for central heating, such as gas or water conduits, as well as gas conduits for other purposes, or flexible tubes for throughfeed of communication cables or electricity cables. Arranging combinations of such conduits is also possible. The machine can be configured here to produce prefabricated floor parts according to the invention wherein the tubes fulfil one or more of the above stated functions.

The invention finally relates to a method for laying a floor heating and/or cooling, comprising of:
- transporting one or more floor parts as described above in rolled-up state to the building in which the floor heating and/or cooling has to be laid;
- unrolling the one or more floor parts onto the floor of the building so that a tube system for the floor heating and/or cooling is formed; and
- coupling each of the tubes of the one or more floor parts to a manifold or another tube of the floor heating and/or cooling.

According to the invention the method further comprises, prior to rolling up, of pressurizing the tube of the one or more floor parts, preferably with air, so that each tube is pressurized during transport of the rolled-up floor part.

In a preferred embodiment the method further comprises of cutting partially into the carrier mat of one or more floor parts in order to lay the respective carrier mat in rotated position on the floor of the building.

In a preferred embodiment the method further comprises of cutting off a part of the carrier mat and/or tube in order to shorten the floor part.

In an alternative embodiment the invention relates to a method for laying a floor heating and/or cooling, comprising of:
- laying a first tube and a second tube on a floor of the building in which the floor heating and/or cooling is being laid, wherein the first tube and second tube are laid in a pattern meandering together on the floor; and
- connecting both outer ends of each tube to a manifold of the floor heating and/or cooling such that in use the flow through the first tube is in opposite direction to the flow through the second tube meandering together therewith.

In an embodiment in which the floor part comprises two tubes the method comprises of connecting both outer ends of each tube to a manifold of the floor heating and/or cooling such that in use the flow through the first tube is in opposite direction to the flow through the second tube.

In other words, the heat transport medium in the first tube flows during use from a first side of the carrier mat to a second side of the carrier mat while in the second tube the heat transport medium flows from the second side to the first side.

In an alternative embodiment a prefabricated floor part for floor heating and/or cooling comprises a roll-up carrier mat, a plastic tube, such as a PEX tube, which is attached in meander or spiral form to the carrier mat and which can be rolled up together with the carrier mat, wherein the tube is pressurized. In such an alternative embodiment the carrier mat need not necessarily be cuttable with a hand tool.

The system, the machine and the method according to the invention have the same advantages and effects as described above for the prefabricated floor part.

Further advantages, features and details of the invention are elucidated on the basis of exemplary embodiments thereof, wherein reference is made to the accompanying figures.
- Figure 1A shows schematically a prefabricated floor part with a single tube according to a first embodiment, wherein the tube is attached to the carrier mat in a meander-shaped pattern;
- Figure 1B shows schematically a prefabricated floor part according to a second embodiment of the invention;
- Figure 1C shows an exploded view of a floor part according to an embodiment of the invention;
- Figure 1D shows a top view of the floor part according to figure 1C;
- Figure 1E shows a top view of a variant of the floor part according to figure 1C;
- Figure 2A shows schematically a prefabricated floor part according to a third embodiment in which a strip is left uncovered on a side of the carrier mat;
- Figure 2B shows schematically a prefabricated floor part according to a fourth embodiment of the invention;
- Figures 2C and 2D show modification of the floor part of figure 1B to two single meandering tubes;
- Figure 3A shows schematically a prefabricated floor part according to a fifth embodiment wherein the tube is attached to the carrier mat in a spiral-shaped pattern;
- Figure 3B shows a top view of an alternative embodiment of a floor part according to the invention;
- Figure 4A illustrates cutting into the floor part of figure 2A;
- Figure 4B illustrates cutting into the floor part of figure 1B;
- Figure 5A shows schematically a floor part according to figure 1A or 2A in rolled-up state;
- Figure 5B shows schematically the floor part according to figure 1C, 1B or IE in rolled-up state;
- Figure 6 shows schematically an embodiment of a cuttable carrier mat;
- Figure 7 shows schematically two floor parts according to figure 2A which are connected to a manifold;
- Figure 8 shows schematically a floor according to an embodiment of the invention;
- Figure 9A shows schematically an embodiment of a machine for producing the prefabricated floor parts;
- Figure 9B show a schematic side view of an embodiment of a machine for producing prefabricated floor parts;
- Figure 10 shows a schematic top view of the machine of figure 9A;
- Figure 11 shows a top view of the machine of figure 9B; and
- Figures 12A, 12B, 12C, 12D show an industrial embodiment of the machine according to the invention.

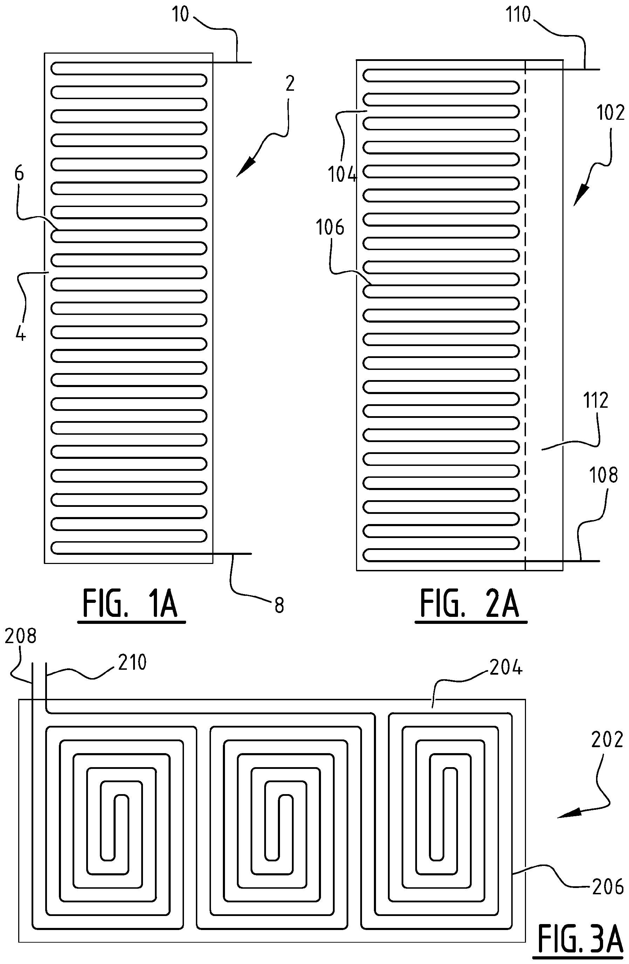

Prefabricated floor part 2 comprises a rectangular carrier mat 4 (figure 1A). A peroxide cross-linked polyethylene (PEX-A) tube 6 is attached to carrier mat 4. In the shown example tube 6 has a length of about 100 metres. Other tube lengths are likewise possible, although the length is preferably a maximum of about 120 metres. In the shown example the tube diameter is 10 mm, with a wall thickness of 1.1 mm. Other tube dimensions are however also possible. The tube can alternatively be manufactured from PE-RT.

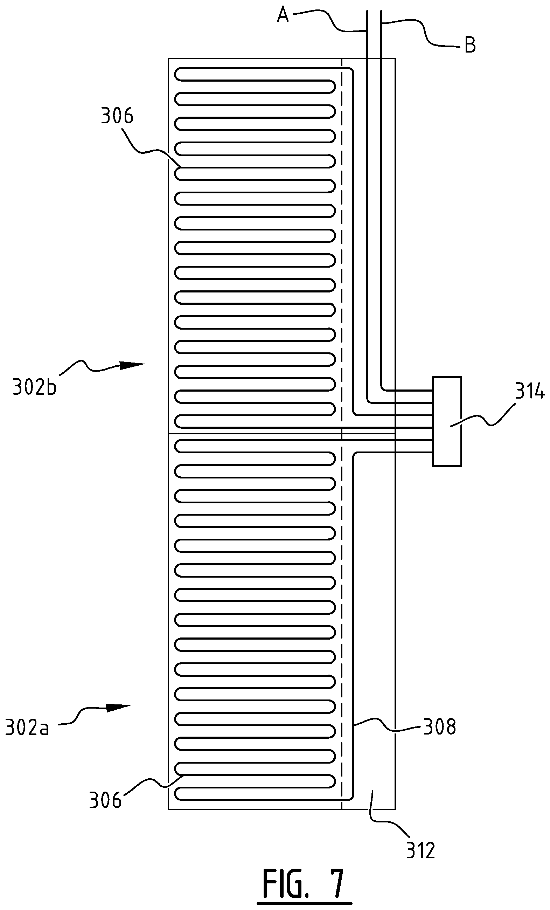

End parts 8 and 10 of tube 6 are not attached to carrier mat 4, so that they can be freely positioned, for instance for coupling to other tubes or to a manifold of the floor heating or cooling. This will be further elucidated below with reference to figure 7.

Prefabricated floor part 102 (figure 2A) likewise comprises a carrier mat 104 to which a PEX-A tube 106 is attached in a meander-shaped pattern. A strip 112 is however left clear in longitudinal direction on carrier mat 104, i.e. the meander-shaped pattern of tube 106 does not extend over strip 112. Space is in this way created on carrier mat 104 to lay tube parts of floor part 102 or other floor parts. In an embodiment with a tube on the upper and underside a strip can be left clear in a similar manner on the underside o. A strip is however preferably left clear only on the upper side of the carrier mat for throughfeed of tubes or tube parts. This will be further elucidated below with reference to figure 7.

Figure 1A and figure 2A show a meander-shaped pattern of the tube. Floor part 202 (figure 3A) illustrates an alternative in which tube 206 is attached in a spiral form to carrier mat 204. Outer ends 208, 210 are situated close to each other in the shown configuration, this simplifying connection to a manifold. Three spirals are formed on the carrier mat in the shown example, although a different number is likewise possible, for instance two, four, five or six. In an embodiment with a tube on the upper and underside, a similar pattern can be provided on the underside o (not shown). The pattern of tube 212 on the underside o preferably follows the pattern of tube 206 on the upper side b of carrier mat 204 so that tubes 206, 212 are situated substantially directly one above the other and the patterns are substantially overlapping. In an alternative embodiment the pattern of tube 206 on the upper side b of carrier mat 204 is mirrored relative to the pattern of tube 212 on the underside of carrier mat 204.

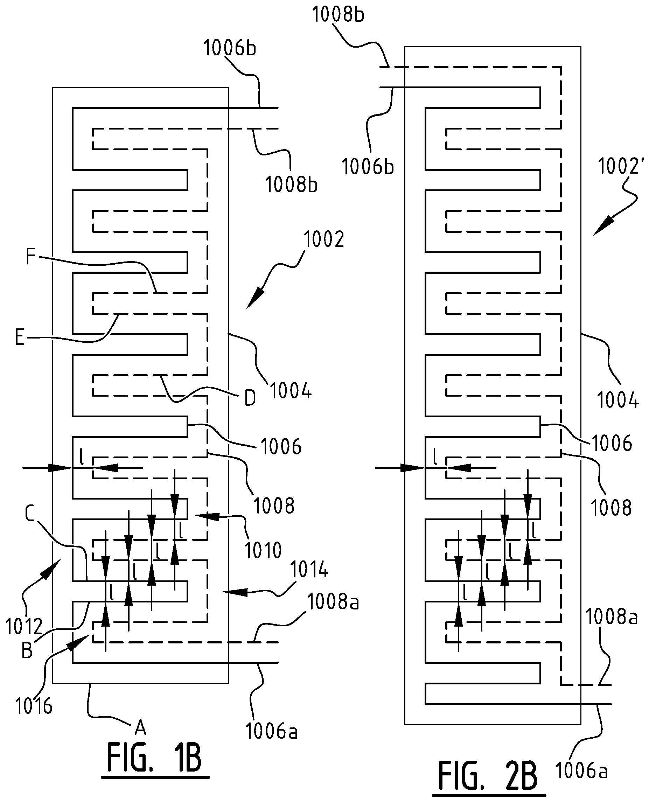

Prefabricated floor part 1002 comprises a rectangular carrier mat 1004 (figure 1B). A first tube 1006 and a second tube 1008 are attached to carrier mat 1004.

In the shown example tubes 1006, 1008 are manufactured from peroxide cross-linked polyethylene (PEX-A). The tube can alternatively be manufactured from for instance PE-RT or another plastic.

In the shown example tubes 1006, 1008 each have a length of about 140 metres. Other tube lengths are likewise possible, although the length of each tube is preferably a maximum of about 140 metres. In the shown example the tube diameter is 10 mm, with a wall thickness of 1.1 mm. Other tube dimensions are however also possible.

End parts 1006a, 1006b of tube 1006 and end parts 1008a, 1008b of tube 1008 are not attached to carrier mat 1004 in the shown example, so that they have some freedom of movement, for instance for coupling to other tubes or to a manifold of the floor heating or cooling. In the shown example outer ends 1006a, 1006b, 1008a, 1008b extend outside carrier mat 1004, this however being optional.

Prefabricated floor part 1002' is largely similar to floor part 1002 of figure 1B. In the shown example outer ends 1006b, 1008b are however provided on the other side from outer ends 1006a, 1008a, while in floor part 1002 outer ends 1006a, 1006b, 1008a, 1008b are provided on the same side.

As shown in figure 1B, tube 1006 alternately comprises right-hand loops 1010, i.e. loops which extend to the right, and left-hand loops 1012, i.e. loops which extend to the left. Right-hand loop 1010 comprises a bend to the left, while left-hand loop 1012 comprises a bend to the right. Tube 1008 similarly comprises right-hand loops 1014 and left-hand loops 1016.

In the shown embodiment left-hand loops 1012 of first tube 1006 are wider than right-hand loops 1010 of the same tube 1006. In particular the distance between the transversely extending parts A and B of left-hand loops 1012 is wider than the distance between the transversely extending parts B and C of right-hand loops 1010. For second tube 1008 it is the case that right-hand loops 1014 are wider than left-hand loops 1016. In particular the distance between the transversely extending tube parts D and E of right-hand loops 1014 is wider than the distance between the transversely extending tube parts E and F of left-hand loops 1016.

In the shown example the transversely extending parts B and C of the narrower right-hand loops 1010 of first tube 1006 lie at a distance 1 from each other. The smallest loops 1016 of second tube 1008, i.e. left-hand loops 1016, likewise have in the shown embodiment a centre-to-centre distance between the transversely extending parts E, F with a length 1. The wider loops 1012, 1014 of respective tubes 1006, 1008 on the other hand have a centre-to-centre distance between the tube parts extending in transverse direction of 31. Thus realized is that the distance between the transversely extending parts A, B, C, D, E, F of tubes 1006, 1008 is always equal to 1. In other words, tube parts A, B, C, D, E, F extending in transverse direction are parallel to each other, or at least substantially parallel to each other.

It is noted that the alternating pattern of right-hand loops 1010, 1014 and left-hand loops 1012, 1016 can if desired differ at the outer ends of carrier mat 1004 from the regular pattern described above. An example hereof is shown in figure 2B in which at the lower part of carrier mat 1004 in the figure there is a variation from the otherwise regular pattern in that two narrower loops are applied for tube 1006. The regular pattern of alternating wider loops and narrower loops is however preferably employed over the whole carrier mat 1004 as shown in figure 1B.

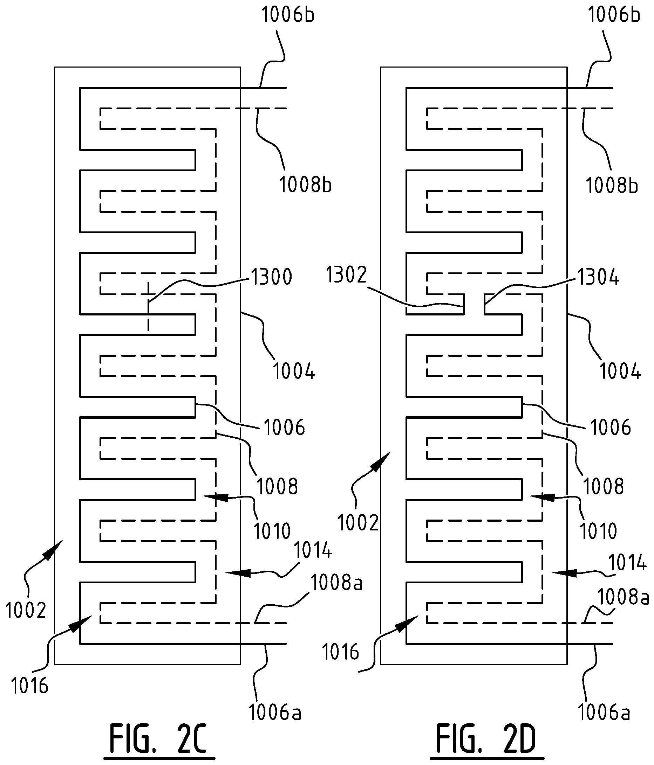

A floor part 1002 (figure 2C) has two tubes 1006, 1008 which meander together. Floor part 1002 can however be easily modified to form two single meandering tubes. That is, floor part 1002 can be converted to a conventional meander arrangement. Tubes 1006, 1008 are for this purpose cut through or separated along line 1300 in figure 2C, wherein two adjacent transversely extending tube parts of the two tubes 1006, 1008 are cut through. The severed tubes 1006, 1008 are then connected to each other with two couplings 1302, 1304 so that an upper tube results from outer end 1006b to outer end 1008b, and a lower tube from outer end 1006a to outer end 1008a. The thus formed tubes form a conventional meander pattern (figure 2D).

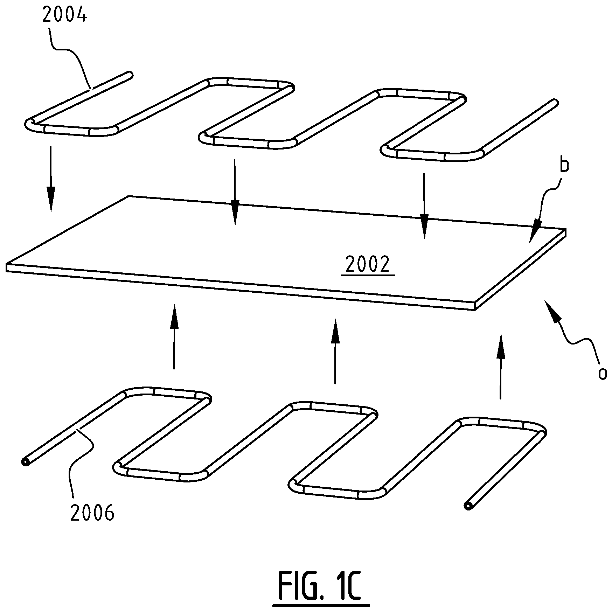

Carrier mat 2002 (figure 1C) comprises an upper side b and an underside o. A first tube 2004 is attached to upper side b of carrier mat 2002. In the shown example first tube 2004 has a meandering pattern. A second tube 2006 is attached to the underside o of carrier mat 2002. In the shown example second tube 2006 likewise has a meandering pattern. Tubes 2004, 2006 are embodied in a flexible material. Tubes 2004, 2006 are for instance manufactured from PEX-A. Carrier mat 2002 is for instance mesh-like (not shown) and tubes 2004, 2006 are attached to carrier mat 2002 by means of a braiding machine, a tacker device or a cable tie gun.

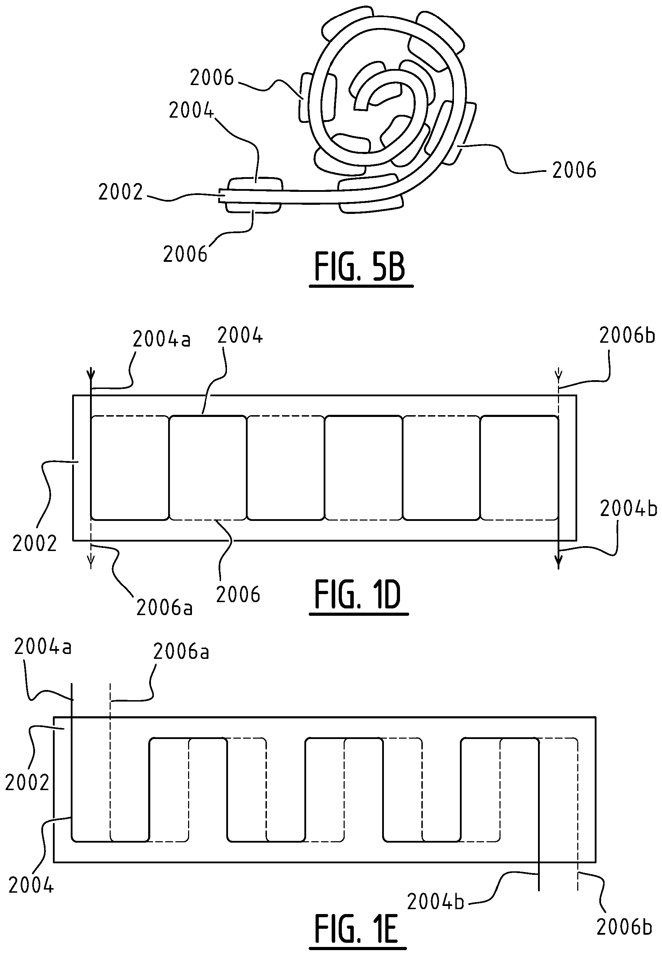

The pattern in which tube 2004 is attached to upper side b of carrier mat 2002 differs from the pattern of tube 2006 (figure 1D). In the shown example the tubes are laid in opposite phase. In order to illustrate the difference in patterns the tube 2006, which is situated on the underside of mat 2002 and is generally not visible in a top view, is shown with a broken line.

The one outer end 2004a of first tube 2004 is situated on a first side of carrier mat 2002, in the figure the left-hand side. The other outer end 2004b of first tube 2004 is situated on the other side of carrier mat 2002, in the figure the right-hand side. The one outer end 2006a of second tube 2006 is also situated on the first side of carrier mat 2002, (the left-hand side), while the other outer end 2006b of second tube 2006 is situated on the second side of the carrier mat (the right-hand side).

As indicated by the arrows, tube 2004 is connected to the manifold of the respective floor heating system/floor cooling system such that the heat transport medium in tube 2004 flows from outer end 2004a to outer end 2004b, i.e. from left to right over carrier mat 2002. Tube 2006 is on the other hand connected to the manifold of the system such that the heat transport medium in tube 2006 flows from outer end 2006b to outer end 2006a, i.e. from right to left over carrier mat 2002. Because of these opposing flow directions a uniform heat distribution is obtained over carrier mat 2002.

Figure 1E shows a variant of the floor part of figure 1D in which the patterns formed by tubes 2004, 2006 are not in opposite phase as in figure ID, but have another phase difference. In the shown example the phase difference is about 90 degrees.

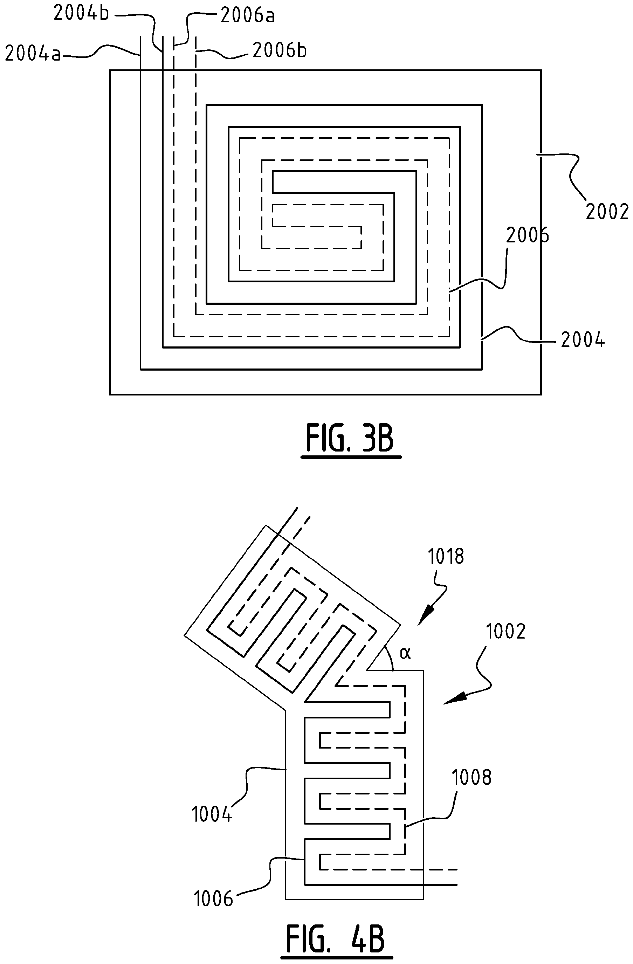

In figures 1C-1E tubes 2004, 2006 are provided in meander form on carrier mat 2002. Other patterns are however also possible. Figure 3B thus shows a spiral-shaped pattern. Both upper tube 2004 and lower tube 2006 are illustrated in the top view of figure 3B. Both tubes 2004, 2006 have a spiral-shaped, i.e. snail shell-shaped, pattern wherein the spirals fit within with each other without there being overlap between tubes 2004, 2006.

It is however alternatively possible to give tubes 2004, 2006 both a spiral-shaped pattern with some overlap. In a further alternative tubes 2004, 2006 are configured with the same spiral pattern, wherein the tubes are substantially overlapping, i.e. the tubes are substantially aligned so that they lie substantially directly above each other.

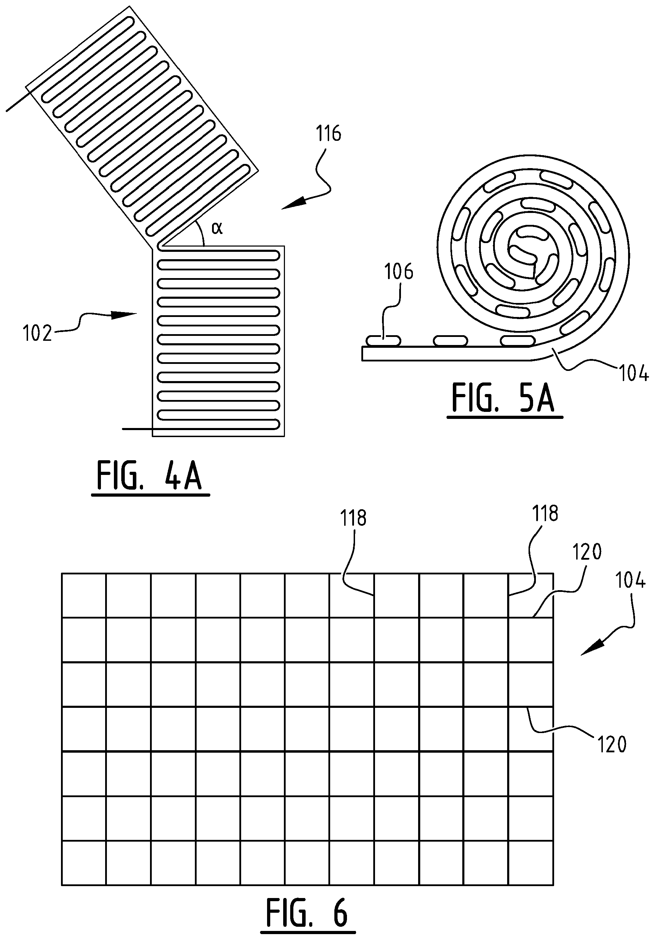

An advantage of the meander-shaped pattern over the spiral-shaped pattern is illustrated in figure 4A. With the meander-shaped pattern it is possible to cut relatively far into carrier mat 104 of floor part 102 without having to cut through tube 106. As a result of notch 116 a part of floor part 102 can be rotated through an angle α, for instance through 90°. Angles up to 180° are however even possible. This has the advantage that floor part 102 can be adapted quickly and easily to the design of the building in which floor part 102 is placed.

It is also possible to cut into a carrier mat 1004 of floor parts 1002, 1002' with two tubes thereon, as can be seen in figure 4B which illustrates this for floor part 1002. Because tubes 1006, 1008 meander together on carrier mat 1004, it is possible to cut into carrier mat 1004 without cutting through tubes 1006, 1008. As a result of notch 1018 a part of floor part 1002 can be rotated through an angle α, for instance through 90°. Angles up to 180° are however even possible. This has the advantage that floor part 1002 can be adapted quickly and easily to the design of the building in which floor part 1002 is placed.

Flexible carrier mat 4, 104, 204, 2004 and the flexibility of PEX tubes 6, 106, 206, 2006 make it possible to roll up floor part 2, 102, 202, 2002 as illustrated in figures 5A and 5B. As shown in the figures, this is the case for the floor part with a single tube or two tubes on one side (figure 5A) as well as for the floor part with tubes arranged on both sides thereof (figure 5B). Tubes 6, 106, 206, 2006 are preferably pressurized with air before being rolled up. Tubes 6, 106, 206, 2006 can for this purpose first be provided with suitable shut-off valves, also referred to as pressurizing taps (not shown). Air is introduced into tube 6, 106, 206, 2006 and the valves are then closed. Because tube 6, 106, 206, 2006 has been filled with air and closed, tube 6, 106, 206, 2006 is less likely to be dented in the rolled-up state. Compressed air is for instance used so that a slight overpressure results in the tube. The pressure in the pressurized tube is for instance 1.01-1.1 bar. Carrier mat 4, 104, 204 is for instance embodied as shown in figure 6. Carrier mat 104 is a mesh of zinc-plated steel wires 118, 120. Square meshes are formed in the shown example. Other shapes are however possible, such as rectangular meshes, triangular meshes or hexagonal meshes. In the shown example the mesh width is 10 cm x 10 cm. The thickness of the zinc-plated steel wires is 1 mm. Other wire thicknesses are however possible according to the invention. The wire thickness is preferably a maximum of about 3 mm so that carrier mat 104 is easy to cut.

In order to install a floor heating and/or cooling a plurality of prefabricated floor parts 2, 102, 202 are unrolled in the associated building. Shown by way of illustration in figure 7 are two unrolled prefabricated floor parts 302a, 302b. Tubes 306 of floor parts 302a, 302b are connected to a central manifold 314. A free end part 308 of tube 306 of floor part 302a is guided for this purpose over an initially uncovered part 312 of the carrier mat in the direction of the manifold. Free end part 308 can if desired then be attached, for instance using a braiding machine or a tacker device. The other outer end of tube 306 is likewise connected to manifold 314.

Figure 7 moreover illustrates that the uncovered strip 312 of the floor parts also provides space for passage of parts of the tubes of other floor parts. Tube parts A and B come from a further prefabricated floor part (not shown) and are guided via part 312 of the floor part uppermost in the figure to manifold 314.

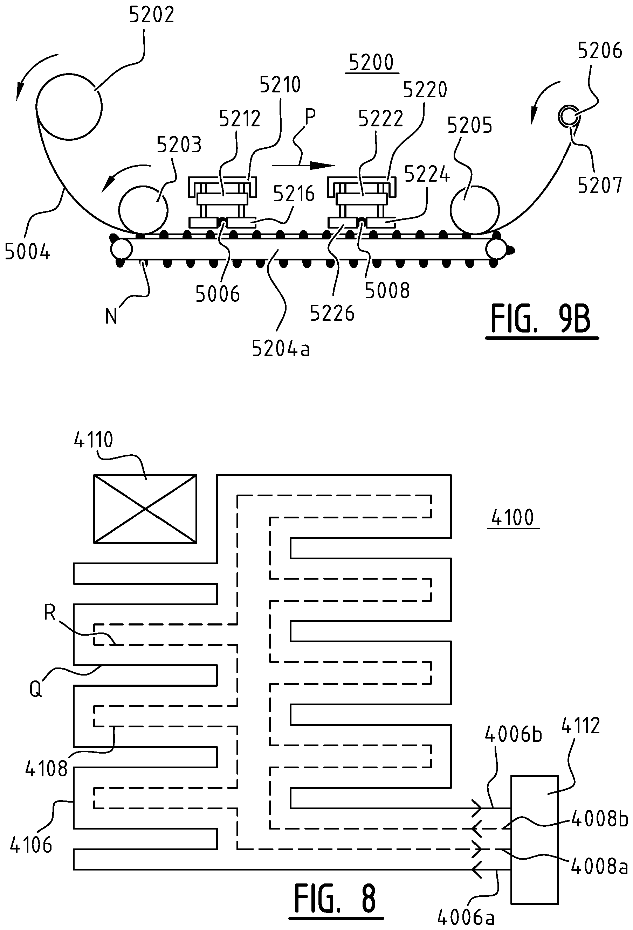

Figure 8 shows an example of a floor 4100 provided with a tube system comprising two tubes 4106, 4108 meandering together. In the shown example the building comprises a pillar 4110 around which tubes 4106, 4108 are laid and subsequently continue in the meandering pattern. The outer ends of tubes 4106, 4108 are connected to a manifold 4112 of the floor heating/cooling. Outer ends 4006a and 4008b are connected here for outgoing flow and outer ends 4008a and 4006b are connected for incoming flow. The flow in tube 4006 is hereby in opposite direction to the flow through tube 4008. Particularly the flow through a tube part Q of tube 4006 is in opposite direction to the flow through the closest tube part R of tube 4008. This increases the efficiency of the floor heating/cooling.

In the example of figure 8 tubes 4106, 4108 are laid on site in the desired pattern and attached to the floor. For this purpose a carrier mat is for instance first laid on the floor to which tubes 4106, 4108 are then attached, for instance using a braiding machine or a tacker device.

According to the invention however, a tube system is preferably laid by unrolling floor parts 4002, 4002' onto floor 4100 and connecting them in similar manner as described above to a manifold 4112.

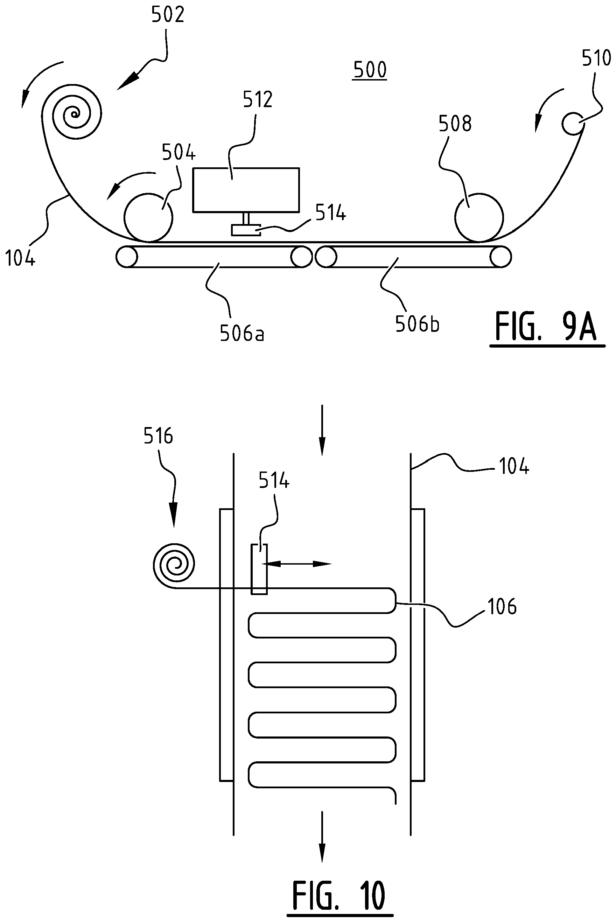

Machine 500 (figures 9A and 10) comprise a roll 502 for the feed of a carrier mat 104. Carrier mat 104 is guided via a guide roller 504 to a conveyor belt 506a, 506b. Illustrated in the shown example are two conveyor belts, although these can also be embodied as a single conveyor belt. Carrier mat 104 is then guided via a second guide roller 508 to a second roll 510. Provided above conveyor belt 506a, 506b is an apparatus 512 for laying on and attaching to carrier mat 104 a PEX tube 106 in a meander-shaped pattern. Apparatus 512 comprises a carriage 514 which can move reciprocally in the width direction of carrier mat 104.

Carriage 514 is supplied with a PEX tube 106 via a roll 516 and lays one length at a time over the width of carrier mat 104. In order to produce a floor part 202 a strip of carrier mat 204 can be left uncovered by having carriage 514 not run over the whole width of carrier mat 204. Apparatus 512 moreover comprises means for attaching the tube 106 laid by the carriage. These means comprise for instance a braiding machine or a tacker device.

Carriage 514 lays one part of tube 106 at a time over the desired width on carrier mat 104, wherein the attaching means of apparatus 512 attach this part of tube 106. By rotating rollers 502, 504, 508, 510 and conveyor belt 506a, 506b carrier mat 104 is then displaced in the direction of the arrows in figure 9. The distance over which carrier mat 104 is displaced corresponds to the desired centre-to-centre distance of the meander-shaped pattern of tube 106. This distance is for instance 10-20 cm. Carriage 514 then moves in the opposite direction in order to place a new part of tube 106 over the desired width on carrier mat 104, wherein the attaching means of apparatus 512 also attach this part of tube 106 to carrier mat 104.

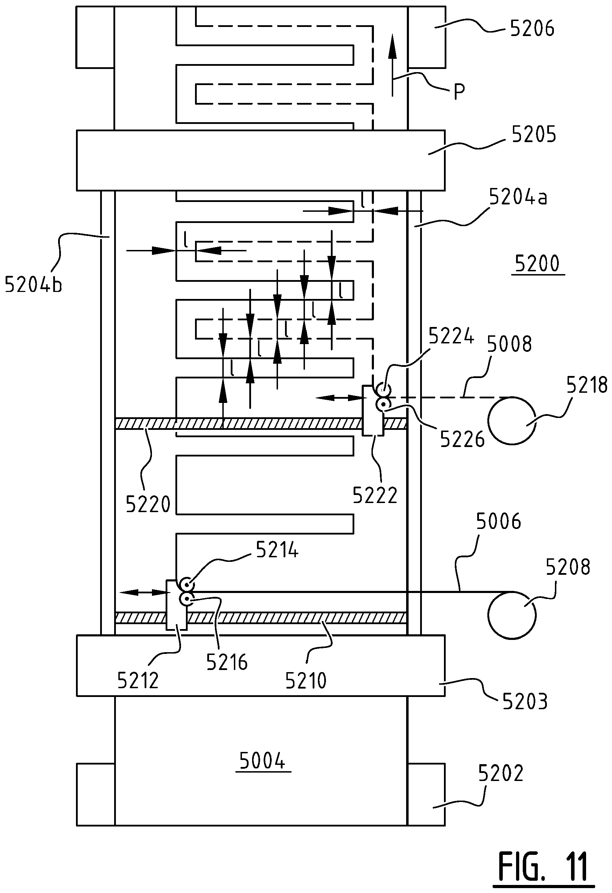

Machine 5200 (figure 9B, 11) comprises a roll 5202 for feeding a mesh-like carrier mat 5004. For the sake of clarity in figure 11 the lattice of carrier mat 5004 is not shown, although carrier mat 5004 has in reality a mesh form.

Carrier mat 5004 is guided from supply roll 5202 to two conveyor belts 5204a, 5204b. A guide roller 5203 is optionally provided to guide the carrier mat in the direction of conveyor belts 5204a, 5204b. Conveyor belts 5204a, 5204b are provided with studs N so that studs N can hook into the meshes of the mesh-like carrier mat 5004 (figure 9B) in order to thus transport the mesh-like carrier mat 5004. Carrier mat 5004 is transported by conveyor belts 5204a, 5204b in the direction of the arrow P, after which carrier mat 5004 is rolled up onto a roll 5206. A guide roller 5205is optionally provided on this output side. Guide rollers 5203, 5205 contribute toward holding carrier mat 5004 on the conveyor belt.

Preferably provided on roll 5206 is a sleeve 5207, for instance of cardboard or plastic, onto which carrier mat 5004 is rolled (see figure 9B). Once the floor part has been completed, this sleeve 5207 with the floor part rolled up thereon is removed from roll 5206. A new sleeve 5207 is then placed so as to produce a following floor part.

First tube 5006 is supplied from a roll 5208. Arranged above the carrier mat is a rail 5210 along which a carriage 5212 can move reciprocally. The carriage is provided with one or more guide rollers 5214, 5216 which position tube 5006 on carrier mat 5004.

Machine 5200 moreover comprises a cable tie gun or braiding machine (not shown) for attaching to mesh-like carrier mat 5004 the tube 5006 laid in transverse direction over carrier mat 5004 by guide rollers 5214, 5216. The cable tie gun or the braiding machine is for instance likewise provided on carriage 5212. The cable tie gun or the braiding machine can alternatively also be located on the other side of carrier mat 5004 relative to the carriage for the purpose of attaching tube 6 to mesh-like carrier mat 5004 from this side.

Carriage 5212 with guide rollers 5214, 5216 lays a part of tube 5006 at a time over the desired width on carrier mat 5004, wherein the attaching means of machine 5200 attach this tube part to carrier mat 5004. By rotating rollers 5202, 5203, 5205, 5206 and conveyor belts 5204a, 5204b carrier mat 5004 is then displaced in the direction of arrow P. Carriage 5212 then moves in the opposite direction in order to place a new part of tube 5006 over the desired width on carrier mat 5004, wherein the attaching means of machine 5200 also attach this part of tube 5006 to carrier mat 5004. The carrier mat is then moved again in the longitudinal direction as according to arrow P and the cycle for attaching tube 5006 in a meandering pattern on carrier mat 5004 begins again.

Second tube 5008 for the floor part is arranged in similar manner on carrier mat 5004. Second tube 5008 is supplied from a roll 5218. A second rail 5220 is arranged downstream of rail 5210 as seen in the transport direction of carrier mat 5004. Arranged in similar manner along this rail 5220 is a carriage 5222 which is provided with one or more guide rollers 5224, 5226. In similar manner as described above for first tube 5006, second tube 5008 is laid on carrier mat 5004 using carriage 5222, after which a braiding machine or cable tie gun (not shown) attaches second tube 5008 to carrier mat 5004.

Machine 5200 arranges tube 5006 on carrier mat 5004 in a pattern of alternating wider left-hand loops and narrower right-hand loops, while tube 5008 is arranged in a pattern of alternating wider right-hand loops and narrower left-hand loops, wherein the left-hand loops of tube 5008 are arranged in the left-hand loops of tube 5006 and the right-hand loops of tube 5006 are arranged in the right-hand loops of tube 5008. This pattern can of course also be mirrored so that tube 5006 comprises wider right-hand loops and narrower left-hand loops while tube 5008 comprises wider left-hand loops and narrower right-hand loops.

In figure 11 machine 5200 is in a situation, immediately after carrier mat 5004 has been displaced over a distance 3^{∗}1, for forming the wider right-hand loop of tube 5008 and the wider left-hand loop of tube 5006. Carriages 5212, 5222 will now be moved respectively to left and right in order to complete the wide loops. Carrier mat 5004 is then displaced through a distance 1 in order to form the narrower left-hand loop of tube 5008 and the narrower right-hand loop of tube 5006. Stated briefly, the distance between rails 5220 and 5210 and the desired distance 1 between the two transversely extending parts of tubes 5006 and 5008 correspond to each other so that carriages 5212, 5222 can make the respective wider loops and narrower loops of tubes 5006, 5008 synchronously.

In machine 5200 carrier mat 5004 is transported horizontally along the attaching means. It is however also possible to configure machine 5200 such that carrier mat 5004 is transported vertically along the attaching means. The attaching means, such as a cable tie gun or a braiding machine, are in that case preferably provided on carriages 5212, 5222 so that tubes 5006, 5008 can be attached immediately to carrier mat 4 while carriages 5212, 5222 position tubes 5006, 5008 on carrier mat 5004.

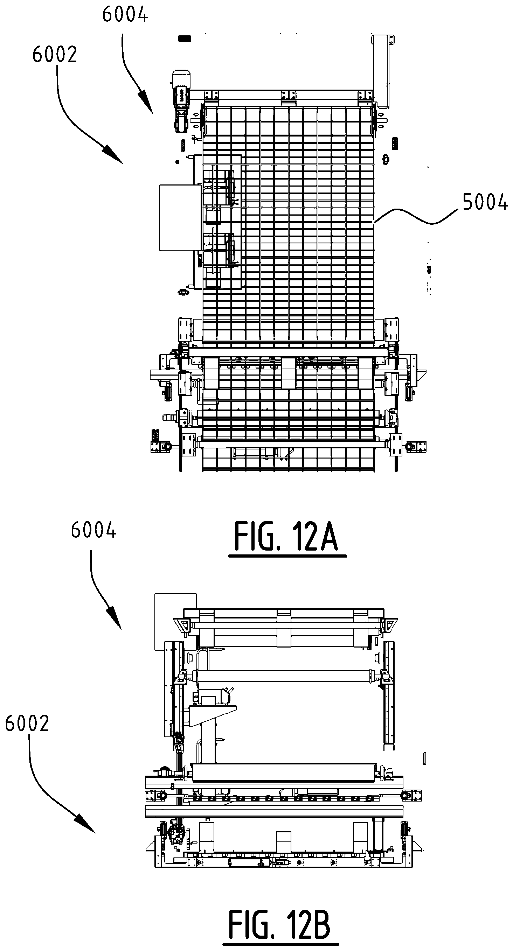

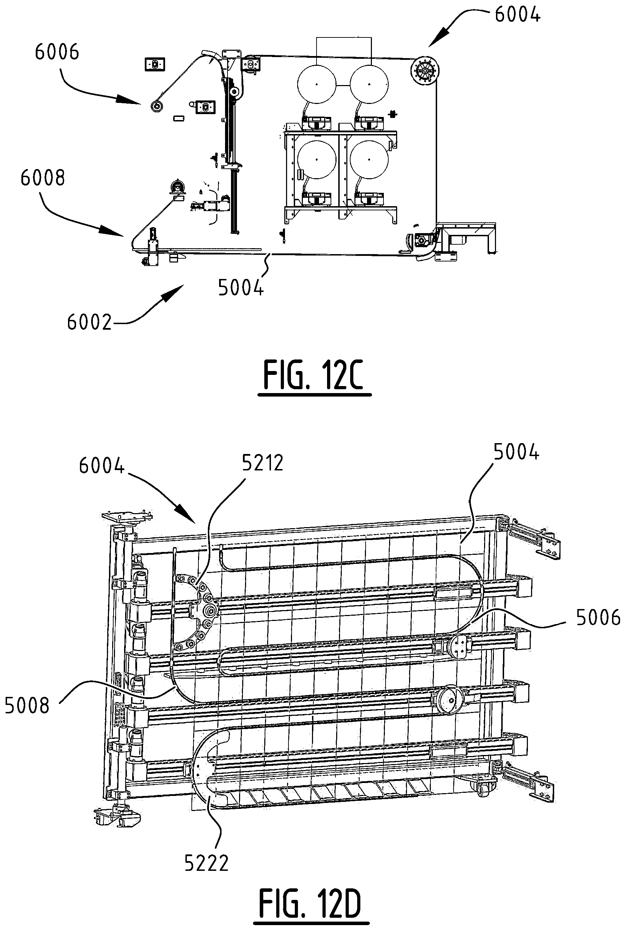

The machines described schematically above are embodied in a possible embodiment as industrial machine (see figures 12A-D). In the shown embodiment machine 6002 is provided with carrier mat 5004 which is carried through machine 6002. From tube inlet 6004 tubes 5006, 5008 are introduced into the machine and arranged on carrier mat 5004. Shown in the detailed view of figure 12D are carriages 5212, 5222 which realize the positioning of tubes 5006, 5008 on carrier mat 5004. Readily visible are the meandering patterns of tubes 5006, 5008 which lie one within the other without crossing each other. In the shown embodiment (see figure 12D) carriages 5212, 5222 are also configured to be positioned adjacently of carrier mat 5004 in order to realize a good guiding of tubes 5006, 5008. The wide loops of tubes 5006, 5008 have a dimension here amounting to about 0.5 m, while the narrower loops of tubes 5006, 5008 extend therebetween. In the shown embodiment carrier mat 5004 is carried from the top downwards through machine 6002. Substantially the whole path to be covered by carrier mat 5004 through machine 6002 from inlet 6006 to outlet 6008 is shown in figures 12A-12D.

The present invention is by no means limited to the above described embodiments thereof. The rights sought are defined by the following claims, within the scope of which many modifications can be envisaged.

## Claims

1. Prefabricated floor part (2, 102, 202, 1002, 302 a,b) for floor heating and/or cooling, comprising:
- a roll-up carrier mat (4, 104, 204, 1004, 2002, 5004);
- a first tube (6, 106, 206, 1006, 2004, 306, 4106) which is attached in meander or spiral form to the carrier mat and can be rolled up together with the carrier mat, wherein the carrier mat is embodied such that the carrier mat can be cut with a hand tool,
**characterized in that** the first tube comprises compressed air and each outer end of the first tube is provided with a shut-off valve and is further provided with sealing means, so that the compressed air is sealed and held in the first tube.

2. Prefabricated floor part as claimed in claim 1, comprising a second tube, wherein each tube comprises a first and second outer end (8, 10, 1006 a,b, 308, 4008 a,b) for connection to a manifold (314, 4112) or other tubes of the floor heating and/or cooling, wherein the first tube and second tube are attached meandering together to the carrier mat.

3. Prefabricated floor part as claimed in claim 2, wherein each of the first tube and the second tube comprises a meandering pattern of alternately a left-hand loop (1012, 1016) and a right-hand loop (1010, 1014), wherein the left-hand loop of the one tube is arranged in the left-hand loop of the other tube, while the right-hand loop of the other tube is arranged in the right-hand loop of the one tube.

4. Prefabricated floor part as claimed in claim 3, wherein one of the left-hand loop and right-hand loop is in each case wider than the other loop, wherein the narrower loops of the first tube are arranged in each case in the wider loops of the second tube and the narrower loops of the second tube are arranged in each case in the wider loops of the first tube.

5. Prefabricated floor part as claimed in any of the claims 2-4, wherein:
- the first tube (206) for heat transport medium is attached to the upper surface of the carrier mat; and
- the second tube (212) for heat transport medium is attached to the lower surface of the carrier mat.

6. Prefabricated floor part as claimed in any of the claims 2-5, wherein each outer end of the second tube is provided with a shut-off valve, and is further provided with sealing means, and wherein the second tube comprises compressed air.

7. Prefabricated floor part as claimed in any of the foregoing claims, wherein each of the tubes is attached in a path in the longitudinal direction of the carrier mat, wherein the width of the mat is greater than the path covered by the tube or tubes so that an uncovered strip (112, 312) is formed adjacently of the path covered by the tube or tubes.

8. Prefabricated floor part as claimed in any of the foregoing claims, wherein at least one outer end (308) of each tube extends from the carrier mat.

9. System for laying floor heating or cooling, comprising the prefabricated floor part as claimed in any of the claims 1-8 and mechanical tube couplings for coupling the tube or tubes to a manifold (314) and/or to another tube of the floor heating or cooling.

10. System for laying floor heating or cooling, comprising at least one prefabricated floor part as claimed in any of the claims 1-8 and a manifold connected to the first tube and the second tube, wherein the manifold is switchable between a first mode, in which the manifold allows heat transport medium to flow through both tubes, and a second mode in which the manifold allows heat transport medium to flow through only one of the tubes.

11. Floor (4100) provided with a prefabricated floor part as claimed in any of the claims 1-7.

12. Method for laying a floor heating and/or cooling, comprising of:
- transporting one or more floor parts as claimed in claims 1-7 in rolled-up state to the building in which the floor heating and/or cooling has to be laid;
- unrolling the one or more floor parts onto the floor of the building so that a tube system for the floor heating and/or cooling is formed; and
- coupling each of the tubes of the one or more floor parts to a manifold or another tube of the floor heating and/or cooling.

13. Method according to claim 12, the method further comprising of cutting partially into the carrier mat of one or more floor parts in order to lay the respective carrier mat in rotated position on the floor of the building.

## Patentansprüche

1. Vorgefertigtes Bodenteil (2, 102, 202, 1002, 302 a,b) für Fußbodenheizung und/oder -kühlung, aufweisend:
- eine aufrollbare Trägermatte (4, 104, 204, 1004, 2002, 5004);
- eine erste Röhre (6, 106, 206, 1006, 2004, 306, 4106), die mäanderförmig oder spiralförmig an der Trägermatte befestigt ist und die zusammen mit der Trägermatte aufgerollt werden kann,
wobei die Trägermatte so ausgeführt ist, dass die Trägermatte mit einem Handwerkszeug geschnitten werden kann,
**dadurch gekennzeichnet, dass** die erste Röhre Druckluft enthält und jedes äußere Ende der ersten Röhre mit einem Absperrventil versehen ist und ferner mit Abdichtungsmitteln versehen ist, so dass die Druckluft abgedichtet und in der ersten Röhre gehalten wird.

2. Vorgefertigtes Fußbodenteil nach Anspruch 1, aufweisend ein zweites Rohr, wobei jedes Rohr ein erstes und ein zweites äußeres Ende (8, 10, 1006 a,b, 308, 4008 a,b) zum Anschluss an einen Verteiler (314, 4112) oder andere Rohre der Fußbodenheizung und/oder -kühlung aufweist, wobei das erste Rohr und das zweite Rohr zusammen mäanderförmig an der Trägermatte befestigt sind.

3. Vorgefertigtes Bodenteil nach Anspruch 2, wobei sowohl das erste Rohr als auch das zweite Rohr ein mäanderförmiges Muster aus abwechselnd einer linken Schlaufe (1012, 1016) und einer rechten Schlaufe (1010, 1014) aufweist, wobei die linke Schlaufe des einen Rohres in der linken Schlaufe des anderen Rohres angeordnet ist, während die rechte Schlaufe des anderen Rohres in der rechten Schlaufe des einen Rohres angeordnet ist.

4. Vorgefertigtes Bodenteil nach Anspruch 3, wobei von der linken Schlaufe und der rechten Schlaufe jeweils eine breiter ist als die andere Schlaufe, wobei die schmaleren Schlaufen der ersten Röhre jeweils in den breiteren Schlaufen der zweiten Röhre und die schmaleren Schlaufen der zweiten Röhre jeweils in den breiteren Schlaufen der ersten Röhre angeordnet sind.

5. Vorgefertigtes Bodenteil, nach einem der Ansprüche 2 bis 4, wobei:
- das erste Rohr (206) für das Wärmetransportmedium an der oberen Fläche von der Trägermatte, und
- das zweite Rohr (212) für das Wärmetransportmedium an der Unterseite der Trägermatte befestigt ist.

6. Vorgefertigtes Bodenteil nach einem der Ansprüche 2 bis 5, wobei jedes äußere Ende der zweiten Röhre mit einem Absperrventil versehen ist und ferner mit Abdichtungsmitteln, und wobei die zweite Röhre Druckluft enthält.

7. Vorgefertigtes Bodenteil, nach einem der vorhergehenden Ansprüche, wobei jedes der Rohre auf einem Weg in Längsrichtung der Trägermatte befestigt ist, wobei die Breite der Matte größer ist als der von dem Rohr oder den Rohren bedeckte Weg, so dass ein unbedeckter Streifen (112, 312) angrenzend an den von dem Rohr oder den Rohren bedeckten Weg gebildet wird.

8. Vorgefertigtes Bodenteil, nach einem der vorhergehenden Ansprüche, wobei mindestens ein äußeres Ende (308) jedes Rohres von der Trägermatte ausgeht.

9. System zur Verlegung einer Fußbodenheizung oder -kühlung, aufweisend das vorgefertigte Fußbodenteil nach einem der Ansprüche 1 bis 8 und mechanische Rohrkupplungen zur Verbindung des Rohres oder der Rohre mit einem Verteiler (314) und/oder mit einem anderen Rohr der Fußbodenheizung oder -kühlung.

10. System zum Verlegen einer Fußbodenheizung oder -kühlung, aufweisend mindestens ein vorgefertigtes Fußbodenteil nach einem der Ansprüche 1 bis 8 und einen Verteiler, der mit dem ersten Rohr und dem zweiten Rohr verbunden ist, wobei der Verteiler zwischen einem ersten Modus, in dem der Verteiler es einem Wärmetransportmedium erlaubt, durch beide Rohre zu fließen, und einem zweiten Modus umschaltbar ist, in dem der Verteiler es einem Wärmetransportmedium erlaubt, durch nur eines der Rohre zu fließen.

11. Fußboden (4100) versehen mit einem vorgefertigten Fußbodenteil nach einem der Ansprüche 1 bis 7.

12. Verfahren zum Verlegen einer Fußbodenheizung und/oder -kühlung, aufweisend die folgenden Schritte:
- Transportieren eines oder mehrerer Fußbodenteile nach einem der Ansprüche 1 bis 7 in aufgerolltem Zustand zu dem Gebäude, in dem die Fußbodenheizung und/oder -kühlung verlegt werden soll;
- Abrollen des einen oder der mehreren Fußbodenteile auf dem Fußboden des Gebäudes, so dass ein Rohrsystem für die Fußbodenheizung und/oder -kühlung gebildet wird; und
- Verbinden jedes der Rohre des einen oder der mehreren Bodenteile mit einem Verteiler oder mit einem anderen Rohr der Fußbodenheizung und/oder -kühlung.

13. Verfahren nach Anspruch 12, wobei das Verfahren ferner das teilweise Einschneiden eines oder mehrerer Bodenteile in die Trägermatte umfasst, um die jeweilige Trägermatte in gedrehter Position auf dem Fußboden des Gebäudes zu verlegen.

## Revendications

1. Partie de plancher préfabriquée (2, 102, 202, 1002, 302a, b) destinée à un plancher chauffant et/ou refroidissant, comprenant :
un tapis de support d'enroulement (4, 104, 204, 1004, 2002, 5004) ;
un premier tube (6, 106, 206, 1006, 2004, 306, 4106) qui est fixé en forme de méandre ou de spirale sur le tapis de support et peut être enroulé ensemble avec le tapis de support,
dans lequel le tapis de support est mis en œuvre de telle sorte que le tapis de support peut être coupé avec un outil manuel,
**caractérisé en ce que** le premier tube contient de l'air comprimé et chaque extrémité externe du premier tube comporte une vanne d'isolement et comporte, en outre, un moyen de scellement, de telle sorte que l'air comprimé est scellé et maintenu dans le premier tube.

2. Partie de plancher préfabriquée selon la revendication 1, comprenant un second tube, dans lequel chaque tube comprend des première et seconde extrémités externes (8, 10, 1006a, 1006b, 308, 4008a, 4008b) afin d'assurer un raccordement à un collecteur (314, 4112) ou à d'autres tubes du plancher chauffant et/ou refroidissant, dans lequel le premier tube et le second tube sont fixés en forme de méandre ensemble sur le tapis de support.

3. Partie de plancher préfabriquée selon la revendication 2, dans laquelle chacun du premier tube et du second tube comprend un profil en forme de méandre comportant, en alternance, une boucle du coté gauche (1012, 1016) et une boucle du côté droit (1010, 1014), dans lequel la boucle du côté gauche du premier tube est agencée sur la boucle du côté droit de l'autre tube, alors que la boucle du côté droit de l'autre tube est agencée sur la boucle du côté gauche du premier tube.

4. Partie de plancher préfabriquée selon la revendication 3, dans laquelle l'une de la boucle du côté gauche et de la boucle du côté droit est dans chaque cas plus large que l'autre boucle, dans laquelle les boucles plus étroites du premier tube sont agencées dans chaque cas sur les boucles plus larges du second tube et les boucles plus étroites du second tube sont agencés dans chaque cas sur les boucles plus larges du premier tube.

5. Partie de plancher préfabriquée selon l'une quelconque des revendications 2 à 4, dans laquelle :
le premier tube (206) destiné à un fluide caloporteur est fixé sur la surface supérieure du tapis de support ; et
le second tube (212) destiné à un fluide caloporteur est fixé sur la surface inférieure du tapis de support.

6. Partie de plancher préfabriquée selon l'une quelconque des revendications 2 à 5, dans laquelle chaque extrémité externe du second tube comporte une vanne d'isolement et comporte, en outre, un moyen de scellement, et dans laquelle le second tube contient l'air comprimé.

7. Partie de plancher préfabriquée selon l'une quelconque des revendications précédentes, dans laquelle chacun des tubes est fixé sur un trajet dans la direction longitudinale du tapis de support, dans laquelle la largeur du tapis est supérieure au trajet recouvert par le tube ou les tubes de telle sorte qu'une bande non couverte (112, 312) est formée de manière adjacente au trajet recouvert par le tube ou les tubes.

8. Partie de plancher préfabriquée selon l'une quelconque des revendications précédentes, dans laquelle au moins une extrémité externe (308) de chaque tube s'étend à partir du tapis de support.

9. Dispositif d'agencement d'un plancher chauffant ou refroidissant, comprenant la partie de plancher préfabriquée selon l'une quelconque des revendications 1 à 8 et des raccords de tube mécaniques destinés à coupler le ou les tubes à un collecteur (314) et/ou à un autre tube du plancher chauffant ou refroidissant.

10. Dispositif d'agencement d'un plancher chauffant ou refroidissant, comprenant au moins une partie de plancher préfabriquée selon l'une quelconque des revendications 1 à 8 et un collecteur raccordé au premier tube et au second tube, dans lequel le collecteur peut être commuté entre un premier mode, dans lequel le collecteur permet la circulation du fluide caloporteur à travers les deux tubes, et un second mode dans lequel le collecteur permet la circulation du fluide caloporteur uniquement à travers l'un des tubes.

11. Plancher (4100) comportant une partie de plancher préfabriquée selon l'une quelconque des revendications 1 à 7.

12. Procédé d'agencement d'un plancher chauffant et/ou refroidissant, comprenant :
le transport d'une ou plusieurs parties de plancher selon les revendications 1 à 7 dans un état enroulé dans le bâtiment dans lequel le plancher chauffant et/ou refroidissant doit être posé ;
le déroulement de la ou des parties de plancher sur le plancher du bâtiment de telle sorte qu'un ensemble de tuyauterie pour le plancher chauffant et/ou refroidissant est formé ;et
le raccordement de chacun des tubes de la ou des parties de plancher à un collecteur ou à un autre tube du plancher chauffant et/ou refroidissant.

13. Procédé selon la revendication 12, le procédé comprenant, en outre, la découpe partielle dans le tapis de support d'une ou plusieurs parties de plancher dans le but de déposer le tapis de support respectif dans une position orientée angulairement sur le plancher du bâtiment.
